# EUROPÄISCHE PATENTANMELDUNG

(11) **EP 4 325 095 A1**
(43) Veröffentlichungstag der Anmeldung: **21.02.2024**
(21) Anmeldenummer: 23187971.9
(22) Anmeldetag: 27.07.2023
(51) Int. Cl.: F16K 1/22, H01M 8/00

(54) **STELLKLAPPENBAUGRUPPE, INSBESONDERE FÜR EINEN GASSTROM IN EINEM BRENNSTOFFZELLENSYSTEM**

(30) Priorität: 11.08.2022 DE 102022120290
(71) Anmelder: Purem GmbH, 66539 Neunkirchen (DE)
(72) Erfinder: Lory, Markus, Stuttgart (DE); Grün, Matthias, Altbach (DE); Wacker, Andreas, Plochingen (DE)
(74) Vertreter: Ruttensperger Lachnit Trossin Gomoll

(57) **Zusammenfassung**

Eine Stellklappenbaugruppe, insbesondere für einen Gasstrom in einem Brennstoffzellensystem, insbesondere in einem Fahrzeug, umfassend ein einen Gasströmungskanal bereitstellendes Stellklappengehäuse (14), eine in dem Stellklappengehäuse (14) zwischen einer eine Gasströmung durch den Gasströmungskanal im Wesentlichen unterbindenden Schließstellung und wenigstens einer den Gasströmungskanal zur Durchströmung freigebenden Offenstellung verstellbaren Stellklappe mit einem an einer um eine Schwenkwellenachse (A) drehbaren Schwenkwelle (18) getragenen, scheibenartigen Stellklappenkörper, wobei die Schwenkwelle (18) einen mit einem Schwenkwellenantrieb zu koppelnden, in einem ersten Lagerbereich (28) an dem Stellklappengehäuse (14) um die Schwenkwellenachse (A) drehbaren getragenen ersten Schwenkwellen-Endabschnitt (48) und einen in einem zweiten Lagerbereich an dem Stellklappengehäuse (14) um die Schwenkwellenachse (A) drehbar getragenen zweiten Schwenkwellen-Endabschnitt aufweist, wobei wenigstens ein Lagerbereich von erstem Lagerbereich (28) und zweitem Lagerbereich eine die Schwenkwelle (18) drehbar stützende Lageranordnung (72) mit einem an der Schwenkwelle (18) die Schwenkwellenachse (A) umgebend angeordneten, in Richtung auf einen Gegen-Lagerbereich (76) am Stellklappengehäuse (14) zu hervorstehenden Lagervorsprung (74) und am Gegen-Lagerbereich (76) einer die Schwenkwellenachse (A) umgebend angeordneten, den Lagervorsprung (74) wenigstens teilweise aufnehmenden Lageraussparung (78) umfasst.

## Beschreibung

Die vorliegende Erfindung betrifft eine Stellklappenbaugruppe beispielsweise für einen Gasstrom in einem Brennstoffzellensystem, das beispielsweise in einem Fahrzeug eingesetzt werden kann, um elektrische Energie bereitzustellen.

In derartigen Brennstoffzellensystemen ist es erforderlich, abhängig vom Betriebszustand, verschiedene Gasströme durch den Anodenbereich bzw. den Kathodenbereich einer Brennstoffzelle bzw. eines Brennstoffzellenstapels hindurch zu leiten bzw. daran vorbei zu leiten. Dabei besteht eine hohe Anforderung an die Dichtigkeit von zur Regulierung derartiger Gasströme eingesetzten Stellklappenbaugruppen, um zu gewährleisten, dass insbesondere in Betriebszuständen, in welchen ein bestimmter Gasstrom nicht durch eine Brennstoffzelle oder nicht an einer Brennstoffzelle vorbei geleitet werden soll, Leckageströme ausgeschlossen werden können bzw. im Wesentlichen kein Gas zur Umgebung entweichen kann.

Es ist die Aufgabe der vorliegenden Erfindung, eine Stellklappenbaugruppe, insbesondere für einen Gasstrom in einem Brennstoffzellensystem, insbesondere in einem Fahrzeug, bereitzustellen, welche bei konstruktiv einfacher Ausgestaltung Gasleckagen im Wesentlichen verhindern kann.

Erfindungsgemäß wird diese Aufgabe gelöst durch eine Stellklappenbaugruppe, insbesondere für einen Gasstrom in einem Brennstoffzellensystem, insbesondere in einem Fahrzeug, umfassend ein einen Gasströmungskanal bereitstellendes Stellklappengehäuse, eine in dem Stellklappengehäuse zwischen einer eine Gasströmung durch den Gasströmungskanal im Wesentlichen unterbindenden Schließstellung und wenigstens einer den Gasströmungskanal zur Durchströmung freigebenden Offenstellung verstellbaren Stellklappe mit einem an einer um eine Schwenkwellenachse drehbaren Schwenkwelle getragenen, scheibenartigen Stellklappenkörper, wobei die Schwenkwelle einen mit einem Schwenkwellenantrieb zu koppelnden, in einem ersten Lagerbereich an dem Stellklappengehäuse um die Schwenkwellenachse drehbaren getragenen ersten Schwenkwellen-Endabschnitt und einen in einem zweiten Lagerbereich an dem Stellklappengehäuse um die Schwenkwellenachse drehbar getragenen zweiten Schwenkwellen-Endabschnitt aufweist, wobei wenigstens ein Lagerbereich von erstem Lagerbereich und zweitem Lagerbereich eine die Schwenkwelle drehbar stützende Lageranordnung mit einem an der Schwenkwelle die Schwenkwellenachse umgebend angeordneten, in Richtung auf einen Gegen-Lagerbereich am Stellklappengehäuse zu hervorstehenden Lagervorsprung und am Gegen-Lagerbereich einer die Schwenkwellenachse umgebend angeordneten, den Lagervorsprung wenigstens teilweise aufnehmenden Lageraussparung umfasst.

Durch das Bereitstellen des Lagervorsprungs und der diesen aufnehmenden Lageraussparung wird eine Zusammenwirkung nach Art eines Kugelgelenks ermöglicht, so dass auch bei Auftreten von Relativbewegungen zwischen der Schwenkwelle und dem Stellklappengehäuse, welche zu einer lokalen Verkippung der Schwenkwelle insbesondere im Bereich des wenigstens einen Lagerbereichs führen können, ein gegen den Austritt von Gas dichter Abschluss der Stellklappenbaugruppe erreicht wird.

Da im ersten Schwenkwellen-Endabschnitt die Schwenkwelle durch den zugeordneten ersten Lagerbereich hindurchgeführt werden muss, um eine Kopplung mit dem Schwenkwellenantrieb erreichen zu können, ist es für einen gasdichten Abschluss besonders vorteilhaft, wenn der wenigstens eine Lagerbereich der erste Lagerbereich ist. Im zweiten Lagerbereich, in welchem die Schwenkwelle mit ihrem zweiten Schwenkwellenachse nicht durch den Lagerbereich hindurch bzw. aus diesen heraus geführt sein muss, kann ein gasdichter Abschluss durch andere Maßnahmen, beispielsweise das vollständige Umkapseln des zweiten Schwenkwellen Endabschnitts mit einer Lagerbuchse, bereitgestellt werden.

Für einen über den gesamten Umfang der Schwenkwelle vollständig gasdichten Abschluss wird vorgeschlagen, dass der Lagervorsprung und die Lageraussparung die Schwenkwellenachse ringartig umgeben.

Der Gegen-Lagerbereich kann einen an dem Stellklappengehäuse getragenen Lagerring mit einer von der Schwenkwelle durchsetzten Öffnung umfassen. An diesem Lagerring kann somit die Schwenkwelle in axialer Richtung und auch in radialer Richtung um die Schwenkwellenachse drehbar abgestützt sein.

Um für den Lagerring eine definierte Positionierung am Stellklappengehäuse gewährleisten zu können, kann der Lagerring in einer an dem Stellklappengehäuse getragenen Lagerbuchse aufgenommen sein.

Zum Bereitstellen der nach Art eines Kugelgelenks mit dem Lagervorsprung zusammenwirkenden Ausgestaltung der Lageraussparung kann diese im Wesentlichen kegelstumpfartig ausgebildet sein und somit eine im Wesentlichen kegelstumpfartig geformte Lagerfläche für den Lagervorsprung bereitstellen.

Der Lagerbereich kann an der Schwenkwelle einen radial hervorstehenden Schwenkwellenkopf umfassen, wobei der Lagervorsprung an einer dem Gegen-Lagerbereich zugewandten Seite des Schwenkwellenkopfs ausgebildet ist.

Für einen eine geringe Anzahl an Bauteilen erfordernden Aufbau wird vorgeschlagen, dass der Schwenkwellenkopf einen integralen Bestandteil der Schwenkwelle bildet. Es ist zu betonen, dass im Sinne der vorliegenden Erfindung diese integrale Ausgestaltung bedeutet, dass der Schwenkwellenkopf mit den verbleibenden Abschnitten der Schwenkwelle einstückig, also monolithisch, ausgebildet ist und nicht durch ein separates an der Schwenkwelle anzubringendes Bauteil bereitgestellt ist.

Um die Zusammenwirkung des Lagervorsprungs mit der Lageraussparung nach Art eines Kugelgelenks zu unterstützen, wird vorgeschlagen, dass der Lagervorsprung in Richtung auf den Gegen-Lagerbereich zu ausgewölbt ausgebildet ist.

Die Erfindung betrifft ferner ein Brennstoffzellensystem, insbesondere für ein Fahrzeug, umfassend wenigstens eine erfindungsgemäße Stellklappenbaugruppe.

Die Erfindung wird nachfolgend mit Bezug auf die beiliegenden Figuren detailliert beschrieben. Es zeigt:
- Fig. 1: eine Prinzipskizze eines Brennstoffzellensystems eines Fahrzeugs;
- Fig. 2: eine Stellklappenbaugruppe für ein Brennstoffzellensystem;
- Fig. 3: Schnittansicht eines Lagerbereichs für eine Schwenkwelle der Stellklappenbaugruppe.

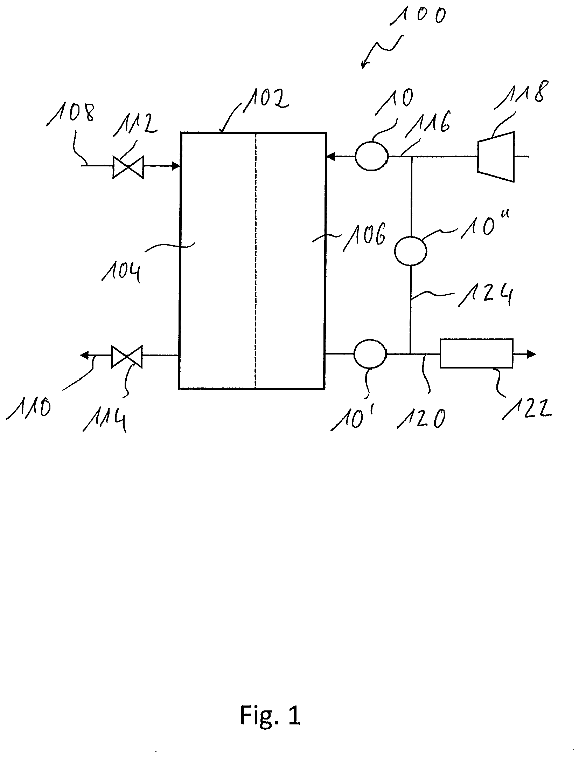

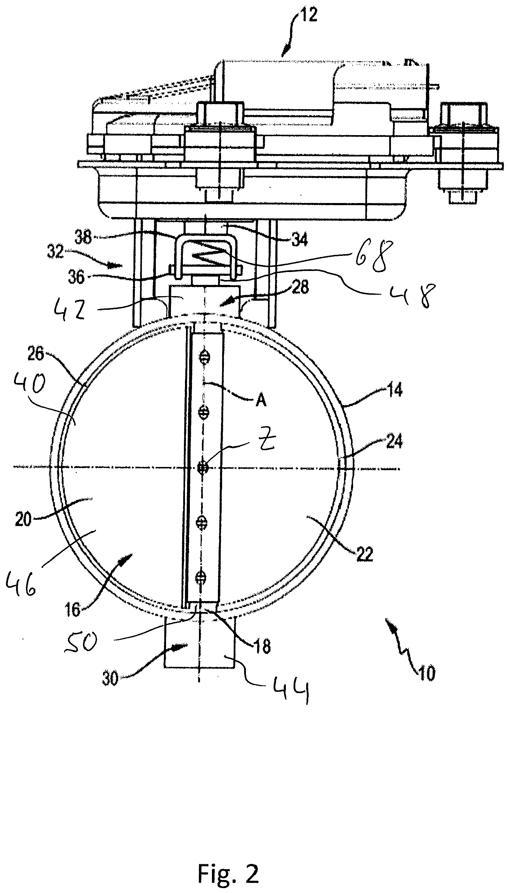

Bevor nachfolgend die erfindungsgemäße Ausgestaltung einer Stellklappenbaugruppe für ein Brennstoffzellensystem insbesondere hinsichtlich einer zum Bereitstellen eines dichten Abschlusses vorgesehenen Struktur derselben detailliert beschrieben wird, wird mit Bezug auf die Fig. 1 der grundsätzliche Aufbau eines Brennstoffzellensystems beschrieben, mit welchem beispielsweise in einem Fahrzeug elektrische Energie bereitgestellt werden kann, und wird mit Bezug auf die Fig. 2 der grundsätzliche Aufbau einer Stellklappenbaugruppe erläutert, mit welcher insbesondere im Zuordnung zum Kathodenbereich eines derartigen Brennstoffzellensystems der Gasstrom reguliert bzw. der Kathodenbereich gegen Durchströmung abgeschlossen werden kann.

Das in Figur 1 dargestellte Brennstoffzellensystem 100 umfasst als wesentlichen Systembereich eine allgemein mit 102 bezeichnete Brennstoffzelle mit einem mit Wasserstoff bzw. einem Wasserstoff enthaltenden Gas zu speisenden Anodenbereich 104 und einem mit Sauerstoff bzw. einem Sauerstoff enthaltenden Gas, zum Beispiel Luft, zu speisenden Kathodenbereich 106.

Dem Anodenbereich 104 sind eine Zuführleitung 108 und eine Abführleitung 110 mit jeweiligen Ventilen 112, 114 zugeordnet, um den Wasserstoff bzw. das Wasserstoff enthaltende Gas in den Anodenbereich 104 einleiten zu können bzw. Anodenabgas aus diesem ableiten zu können und erforderlichenfalls den Anodenbereich 104 vollständig abschließen zu können.

Dem Kathodenbereich 106 ist eine Zuführleitung 116 zugeordnet, über welche beispielsweise vermittels eines Kompressors 118 oder dergleichen das Sauerstoff enthaltende Gas, also beispielsweise Luft, in diesen eingeleitet werden kann. In der Zuführleitung 116 ist eine allgemein mit 10 bezeichnete Stellenklappenbaugruppe vorgesehen, mit welcher der Gasstrom über die Zuführleitung 116 reguliert bzw. der Kathodenbereich 106 in seinem Einleitbereich im Wesentlichen gasdicht abgeschlossen werden kann.

Zum Ableiten von Kathodenabgas ist dem Kathodenbereich 106 eine Abführleitung 120 zugeordnet. Diese führt zu einer Brennstoffzellen-Abgasanlage 122, in welcher beispielsweise vermittels eines Wasserabscheiders im Kathodenabgas enthaltenes Wasser abgeschieden werden kann. Ferner ist in der Abführleitung 120 eine weitere Stellklappenbaugruppe 10' angeordnet, vermittels welcher die Abführleitung 120 und somit ein Ableitbereich des Kathodenbereichs 106 im Wesentlichen gasdicht abgeschlossen werden können.

Zwischen der Zuführleitung 116 und der Abführleitung 120 des Kathodenbereichs 106 verläuft eine Bypassleitung 124. Auch in der Bypassleitung 124 ist eine Stellklappenbaugruppe 10" angeordnet, mit welcher der Gasstrom über die Bypassleitung 124 reguliert werden kann bzw. die Bypassleitung 124 im Wesentlichen gasdicht abgeschlossen werden kann.

Es ist darauf hinzuweisen, dass der in Figur 1 dargestellte und vorangehend beschriebene Aufbau des Brennstoffzellensystems 100 nur ein Beispiel einer Vielzahl verschiedener Möglichkeiten der Zufuhr und Abfuhr von Gas insbesondere am Kathodenbereich 106 veranschaulicht. Maßgeblich ist, dass in Zuordnung zu dem Kartonbereich 106 zumindest eine, gegebenenfalls mehrere Stellklappenbaugruppen 10, 10`, 10" vorgesehen sind, wobei dann, wenn mehrere derartige Stellklappenbaugruppen 10, 10`, 10" vorgesehen sind, diese zu einander grundsätzlich baugleich sein können oder abhängig davon, in welchem Bereich sie positioniert sind und welches Ausmaß an Gasdichtigkeit durch diese bereitzustellen ist, auch unterschiedlich gestaltet sein können.

Die in Fig. 2 dargestellte und beispielsweise in dem Brennstoffzellensystem 100 der Fig. 1 eingesetzte Stellklappenbaugruppe 10 umfasst einen beispielsweise elektromotorischen Stellklappenantrieb 12 und in einem rohrartig ausgebildeten und einen Gasströmungskanal 46 umgrenzenden Stellklappengehäuse 14 eine allgemein mit 16 bezeichnete Stellklappe.

Die Stellklappe 16 umfasst einen an einer Schwenkwelle 18 um eine Schwenkwellenachse A schwenkbar getragenen, scheibenartigen Stellklappenkörper 24 mit zwei jeweils einen Klappenflügel bereitstellenden Stellklappenkörperteilen 20, 22. In Zuordnung zu der Stellklappe 16 ist am Stellklappengehäuse 14 ein Stellklappensitz 26 vorgesehen, an welchem die Stellklappe 16 in einer Schließstellung derselben mit einem bezüglich eines Zentralbereichs Z der Stellklappe 16 radial außen liegenden Abschlussbereich 40 anliegt.

Zum Bewegen der Stellklappe 16 zwischen der Schließstellung und einer vollkommen geöffneten Stellung, in welcher der scheibenartige Stellklappenkörper 24 zur Zeichenebene der Fig. 1 im Wesentlichen orthogonal orientiert ist und somit den Gasströmungskanal 46 im Stellklappengehäuse 14 zur Durchströmung im Wesentlichen vollständig freigibt, ist eine Antriebswelle 34 des Stellklappenantriebs 12 vermittels einer Kopplungsanordnung 32 mit der in Lagerbereichen 28, 30 am Stellklappengehäuse 14 um die Schwenkwellenachse A schwenkbar getragenen Schwenkwelle 18 zur gemeinsamen Drehung gekoppelt. Dabei umfasst die Kopplungsanordnung 32 beispielsweise ein mit der Antriebswelle 34 drehfest verbundenes Kopplungsteil 38 und ein mit der Schwenkwelle 18 drehfest verbundenes Kopplungsteil 36, welches mit dem Kopplungsteil 38 in Drehkopplungseingriff steht.

Jeder der beiden Lagerbereiche 28, 30 umfasst eine am Stellklappengehäuse 14 getragene, beispielsweise an einer Außenumfangsfläche desselben durch Verschweißung festgelegte, Lagerbuchse 42, 44, in welcher ein jeweiliger axialer Endabschnitt der Schwenkwelle 18 um die Schwenkwellenachse A drehbar aufgenommen ist.

Von den beiden Lagerbereichen 28, 30 bildet der Lagerbereich 28 einen ersten Lagerbereich, in welchem ein erster Schwenkwellen-Endabschnitt 48 der Schwenkwelle 18 drehbar gelagert ist. Der erste Schwenkwellen-Endabschnitt 48 steht axial über den ersten Lagerbereich 28 hervor, um vermittels der Kopplungsanordnung 32 mit der Antriebswelle 34 gekoppelt zu werden. Der Lagerbereich 30 bildet einen zweiten Lagerbereich, in welchem ein zweiter Schwenkwellen-Endabschnitt 50 der Schwenkwelle 18 um die Schwenkwellenachse A drehbar gelagert ist.

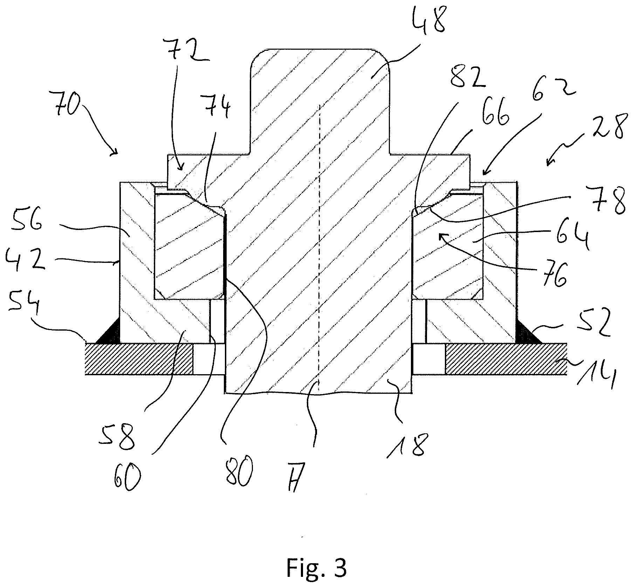

In Fig. 3 ist der erste Lagerbereich 28 detailliert dargestellt. Der erste Lagerbereich 28 umfasst die beispielsweise durch eine vollständig umlaufende Schweißnaht 52 gasdicht an der Außenumfangsfläche 54 des Stellklappengehäuses 14 festgelegte Lagerbuchse 42. Die Lagerbuchse 42 umfasst eine Umfangswand 56 und eine einen an diese anschließenden Boden 58 mit einer von der Schwenkwelle 18 durchsetzten Öffnung 60. Es ist darauf hinzuweisen, dass die Lagerbuchse 42 auch lediglich die Umfangswand 56 und keine Bodenwand aufweisen kann, was insbesondere bei der gewölbten Kontur der Außenumfangsfläche 54 des Stellklappengehäuses 14 eine einfachere Festlegung der Lagerbuchse 42 am Stellklappengehäuse 14 bzw. auch eine einfacher herzustellende Ausgestaltung der Lagerbuchse 42 ermöglicht.

In der Lagerbuchse 42 ist eine allgemein mit 62 bezeichnete Lagereinheit aufgenommen. Die Lagereinheit 62 umfasst im dargestellten Ausgestaltungsbeispiel einen den ersten Schwenkwellenendabschnitt 48 aufnehmenden und radial stützenden Lagerring 64 und ist somit als Gleitlagereinheit ausgebildet. Der Lagerring 64 ist in der Lagerbuchse 42 beispielsweise durch Presspassung aufgenommen und somit in definierter axialer Positionierung an der Umfangswand 56 der Lagerbuchse 42 gehalten. Die Schwenkwelle 18 ist in nachfolgend detailliert beschriebener Art und Weise mit einem am ersten Schwenkwellen-Endabschnitt 48 der vorgesehenen, flanschartigen Schwenkwellenkopf 66 axial am Lagerring 64 abgestützt. Eine die Schwenkwelle 18 mit ihrem Schwenkwellenkopf 66 in Anlage an dem Lagerring 64 haltende Vorspannkraft kann durch eine zwischen der Schwenkwelle 18 bzw. dem Kopplungsteil 36 einerseits und der Antriebswelle 34 bzw. dem Kopplungsteil 38 andererseits wirkende Vorspannfeder 68 bereitgestellt sein, so dass mit der definierten Positionierung des Lagerrings 64 in der Lagerbuchse 42 auch eine definierte Positionierung der Schwenkwelle 18 und somit der gesamten Stellklappe 16 im Stellklappengehäuse 14 vorgegeben ist.

Zur definierten und insbesondere gasdichten axialen und auch radialen Abstützung der Schwenkwelle 18 bezüglich des Stellklappengehäuses 14 ist eine allgemein mit 70 bezeichnete Lageranordnung vorgesehen. Die Lageranordnung 70 umfasst am Schwenkwellenkopf 66 einen Lagerbereich 72, welcher an der dem Lagerring 64 zugewandten axialen Seite des Schwenkwellenkopf 66 eine die Schwenkwellenachse A vorzugsweise unterbrechungsfrei und vollständig umgebenden Lagervorsprung 74 umfasst. Der Lagervorsprung 74 ist in seiner die Schwenkwellenachse A vollständig umgebenden ringartigen Struktur konvex, also nach außen auf den Lagerring 64 zu, ausgewölbt ausgebildet.

Die Lageranordnung 70 umfasst am Lagerring 64 einen Gegen-Lagerbereich 76 mit einer den Lagervorsprung 74 zumindest bereichsweise axial aufnehmenden Lageraussparung 78. Die Lageraussparung 78 ist, ausgehend von einer im Lagerring 64 ausgebildeten und die Schwenkwelle 18 aufnehmenden Öffnung 80 nach radial außen und auf den Schwenkwellenkopf 66 zu sich kegelstumpfartig erweiternd ausgebildet und stellt somit eine kegelstumpfartige Lagerfläche 82 zur axialen und radialen Abstützung des gewölbt ausgebildeten Lagervorsprungs 74 bereit.

Der Lagerbereich 72 mit seinem Lagervorsprung 74 und der Gegen-Lagerbereich 76 mit seiner Lageraussparung 78 bilden eine nach Art eines Kugelgelenks wirkende Lageranordnung, welche grundsätzlich ein zumindest geringfügiges Verkippen der Schwenkwelle 18 in ihren ersten Schwenkwellenendabschnitt 48 ermöglicht. Bei der dabei auftretenden Relativbewegung zwischen dem Schwenkwellenkopf 66 und dem Lagerring 64 bleibt der wulstartige bzw. ausgewölbte und im Wesentlichen einen kugelförmigen Anlagebereich bereitstellende Lagervorsprung 74 über seinen gesamten Umfang in Anlage an der Lagerfläche 82 der Lageraussparung 78. Derartige Relativbewegungen zwischen der Schwenkwelle 18 und dem Lagerring 64 bzw. grundsätzlich dem Stellklappengehäuse 14 führen somit nicht zu einer lokalen Undichtigkeit der Lageranordnung 70.

Um diese Relativbewegung zwischen dem ersten Schwenkwellen-Endabschnitt 48 und dem Lagerring 64 der Lagereinheit 62 zu ermöglichen, kann die Öffnung 80 im Lagerring 64 so gemessen sein, dass die Schwenkwelle 18 damit mit zumindest geringem radialen Spiel aufgenommen ist und die Schwenkwelle 18 somit in ihrem den Lagerring 64 durchsetzenden Längenabschnitt bezüglich diesem verkippen kann. Grundsätzlich kann dieses radiale Spiel auch durch ein bei der Ausgestaltung des Lagerrings 64 als Gleitlagerring unvermeidbar auftretendes Lagerspiel bereitgestellt sein, so dass derartige zu einem Verkippen der Schwenkwelle 18 bezüglich des Lagerrings 64 führende Relativbewegungen, welche beispielsweise bei Auftreten von Vibrationen entstehen können, auf ein minimales Ausmaß beschränkt werden können.

Bei der in Fig. 3 dargestellten Ausgestaltung der Lageranordnung 72 weist der ausgewölbte, grundsätzlich also konvex ausgebildete Lagervorsprung 74 einen vergleichsweise kleinen Wölbungsradius auf. Grundsätzlich könnte der Lagervorsprung 74 auch so gebildet sein, dass der gesamte Lagervorsprung 74 bzw. die durch diesen ausgebildete konvexe Oberfläche durch einen zur Schwenkwellenachse A konzentrisch geformten Kugelkalottenabschnitt bereitgestellt ist.

Weiter ist darauf hinzuweisen, dass die im dargestellten Ausgestaltungsbeispiel mit kegelstumpfartiger Formgebung ausgebildete Lagerfläche 82 des Lagerrings 64 auch gewölbt, in diesem Falle dann konkav gewölbt, ausgebildet sein könnte, wobei der Wölbungsradius beispielsweise dem Wölbungsradius des Lagervorsprungs 74 entsprechen kann oder für die Lagerfläche 82 ein anderer, insbesondere größerer Wölbungsradius als für den Lagervorsprung 74 vorgesehen sein kann.

Es ist darauf hinzuweisen, dass grundsätzlich auch im zweiten Lagebereich 30 eine derartige Struktur vorgesehen sein könnte. Da im zweiten Lagebereich 30 die Schwenkwelle 18 jedoch nicht aus diesem herauszuführen ist, kann ein gasdichter Abschluss beispielsweise auch dadurch erreicht werden, dass die Lagerbuchse 44 des zweiten Lagerbereichs 30 den zweiten Schwenkwellen-Endabschnitt vollständig, also auch axial umkapselt, beispielsweise indem an einer Umfangswand der Lagerbuchse 44 ein die Lagerbuchse 44 axial abschließender Deckel vorgesehen ist.

Abschließend ist weiter darauf hinzuweisen, dass, obgleich die vorangehend beschriebene Stelleklappenbaugruppe besonders vorteilhaft Anwendung finden kann im Gasstrom eines Brennstoffzellensystems, diese auch in anderen Anwendungsbereichen, beispielsweise im Abgasstrom einer Brennkraftmaschine, eingesetzt werden kann.

## Patentansprüche

1. Stellklappenbaugruppe, insbesondere für einen Gasstrom in einem Brennstoffzellensystem, (100) insbesondere in einem Fahrzeug, umfassend ein einen Gasströmungskanal (46) bereitstellendes Stellklappengehäuse (14), eine in dem Stellklappengehäuse (14) zwischen einer eine Gasströmung durch den Gasströmungskanal (46) im Wesentlichen unterbindenden Schließstellung und wenigstens einer den Gasströmungskanal (46) zur Durchströmung freigebenden Offenstellung verstellbaren Stellklappe (16) mit einem an einer um eine Schwenkwellenachse (A) drehbaren Schwenkwelle (18) getragenen, scheibenartigen Stellklappenkörper (24), wobei die Schwenkwelle (18) einen mit einem Schwenkwellenantrieb (12) zu koppelnden, in einem ersten Lagerbereich (28) an dem Stellklappengehäuse (14) um die Schwenkwellenachse (A) drehbaren getragenen ersten Schwenkwellen-Endabschnitt (48) und einen in einem zweiten Lagerbereich (30) an dem Stellklappengehäuse (14) um die Schwenkwellenachse (A) drehbar getragenen zweiten Schwenkwellen-Endabschnitt (50) aufweist, wobei wenigstens ein Lagerbereich von erstem Lagerbereich (28) und zweitem Lagerbereich (30) eine die Schwenkwelle (18) drehbar stützende Lageranordnung (72) mit einem an der Schwenkwelle (18) die Schwenkwellenachse (A) umgebend angeordneten, in Richtung auf einen Gegen-Lagerbereich (76) am Stellklappengehäuse (14) zu hervorstehenden Lagervorsprung (74) und am Gegen-Lagerbereich (76) einer die Schwenkwellenachse (A) umgebend angeordneten, den Lagervorsprung (74) wenigstens teilweise aufnehmenden Lageraussparung (78) umfasst.

2. Stellklappenbaugruppe nach Anspruch 1, **dadurch gekennzeichnet, dass** der wenigstens eine Lagerbereich der erste Lagerbereich (28) ist.

3. Stellklappenbaugruppe nach Anspruch 1 oder 2, **dadurch gekennzeichnet, dass** der Lagervorsprung (74) und die Lageraussparung (78) die Schwenkwellenachse (A) ringartig umgeben.

4. Stellklappenbaugruppe nach einem der Ansprüche 1-3, **dadurch gekennzeichnet, dass** der Gegen-Lagerbereich (76) einen an dem Stellklappengehäuse (14) getragenen Lagerring (64) mit einer von der Schwenkwelle (18) durchsetzten Öffnung (80) umfasst.

5. Stellklappenbaugruppe nach Anspruch 4, **dadurch gekennzeichnet, dass** der Lagerring (64) in einer an dem Stellklappengehäuse (14) getragenen Lagerbuchse (42) aufgenommen ist.

6. Stellklappenbaugruppe nach einem der Ansprüche 1-5, **dadurch gekennzeichnet, dass** die Lageraussparung (78) kegelstumpfartig ausgebildet ist.

7. Stellklappenbaugruppe nach einem der Ansprüche 1-4, **dadurch gekennzeichnet, dass** der Lagerbereich (72) an der Schwenkwelle (18) einen radial hervorstehenden Schwenkwellenkopf (66) umfasst, wobei der Lagervorsprung (74) an einer dem Gegen-Lagerbereich (76) zugewandten Seite des Schwenkwellenkopfs (66) ausgebildet ist.

8. Stellklappenbaugruppe nach Anspruch 7, **dadurch gekennzeichnet, dass** der Schwenkwellenkopf (66) einen integralen Bestandteil der Schwenkwelle (18) bildet.

9. Stellklappenbaugruppe nach einem der Ansprüche 1-8, **dadurch gekennzeichnet, dass** der Lagervorsprung (74) in Richtung auf den Gegen-Lagerbereich (76) zu ausgewölbt ausgebildet ist.

10. Brennstoffzellensystem, insbesondere für ein Fahrzeug, umfassend wenigstens eine Stellklappenbaugruppe (10) nach einem der Ansprüche 1-9.
